(19)

Europäisches
Patentamt

European
Patent Office

Office européen
des brevets

(11)  **EP 4 253 045 A1**

(12)  # EUROPEAN PATENT APPLICATION
published in accordance with Art. 153(4) EPC

(43) Date of publication:
**04.10.2023  Bulletin 2023/40**

(21) Application number: **21897578.7**

(22) Date of filing: **25.10.2021**

(51) International Patent Classification (IPC):
**B32B 27/08** (2006.01)    **B32B 27/32** (2006.01)
**B65D 65/40** (2006.01)

(52) Cooperative Patent Classification (CPC):
**B32B 27/08; B32B 27/32; B65D 65/40;**
Y02W 30/80

(86) International application number:
**PCT/JP2021/039242**

(87) International publication number:
**WO 2022/113600 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **26.11.2020  JP 2020196275**

(71) Applicant: **Mitsui Chemicals, Inc.
Tokyo 104-0028 (JP)**

(72) Inventors:
• **MORIWAKI Ryoji
Ichihara-shi, Chiba 299-0108 (JP)**

• **HOYA Hiroshi
Ichihara-shi, Chiba 299-0108 (JP)**
• **KAMIYA Nozomi
Ichihara-shi, Chiba 299-0108 (JP)**
• **SHIOZAKI Nao
Ichihara-shi, Chiba 299-0108 (JP)**
• **MIZUMA Takahiro
Ichihara-shi, Chiba 299-0108 (JP)**
• **EGAWA Makoto
Ichihara-shi, Chiba 299-0108 (JP)**
• **KAI Yuki
Ichihara-shi, Chiba 299-0108 (JP)**

(74) Representative: **Hoffmann Eitle
Patent- und Rechtsanwälte PartmbB
Arabellastraße 30
81925 München (DE)**

(54)  **LAMINATE**

(57)    An object of the present invention is to provide a laminate containing a propylene polymer as a main component, which is excellent in low-temperature heat-sealability and heat-seal strength, and has a controlled peeling mode with high peeling energy, and the present invention relates to a sealant film including a heat-seal layer and an adjacent layer adjacent to the heat-seal layer, wherein the sealant film satisfies the following requirement (1), the heat-seal layer contains an olefin polymer (B) satisfying the following requirement (2) and a propylene polymer (A) satisfying the following requirement (3), and the adjacent layer contains 1 to 70% by mass of the propylene polymer (A) satisfying the following requirement (3) and 30 to 99% by mass of the olefin polymer (B) satisfying the following requirement (2), and contains 0 to 70% by mass of a propylene polymer (B2) in the olefin polymer (B), provided that (A) + (B) = 100% by mass,
requirement (1): the sealant film is a stretched film or a non-stretched film,
requirement (2): a melting point is less than 120°C or is not observed, and
requirement (3): a melting point is 121°C or more and 170°C or less.

EP 4 253 045 A1

## Description

Technical Field

The present invention relates to a laminate including a sealant film and a substrate, wherein the laminate contains a propylene polymer at a high content, is excellent in low-temperature heat-sealability and heat-seal strength, has a controlled peeling mode with high peeling energy.

Background Art

As a film for heat-seal packaging, a crystalline polypropylene film such as a biaxially stretched film (OPP film) or a non-stretched film (CPP film) made of a crystalline polypropylene has widely been used. The crystalline polypropylene film is excellent in, for example, rigidity and heat resistance, but has a high heat-seal temperature, so that a sealant layer is usually laminated to improve the heat-sealability.

As a sealant film for a packaging material, a film using a composition obtained by blending an ethylene copolymer with a propylene copolymer or a film using only an ethylene copolymer has widely been used. For example, Patent Literature 1 describes a laminate including a sealant film containing a polypropylene resin, an ethylene·α-olefin random copolymer, and a 1-butene·α-olefin random copolymer, and having excellent low-temperature heat-sealability.

Citation List

Patent Literature

Patent Literature 1: JP H11-221884A

Summary of Invention

Technical Problem

The ethylene copolymer is excellent in low-temperature sealability and heat-seal strength, but is preferably a single material as much as possible in consideration of recyclability from the viewpoint of environmental problems. Therefore, a sealant film and a laminate containing a propylene copolymer as a main component and having a sealing property equal to or higher than that of the ethylene copolymer described above have been required.

Further, in practical use, it is considered that not only increasing the attainment point of the heat-seal strength but also increasing the peeling energy, which means the total energy until peeling, would make peeling more difficult.

An object of the present invention is to provide a sealant film and a laminate containing a propylene polymer (herein, the term "polymer" includes homopolymers and copolymers unless otherwise specified) as a main component, achieving high heat-seal strength by providing an adjacent layer adjacent to a heat-seal layer, and having excellent peeling energy by controlling the peeling behavior.

Solution to Problem

The present invention relates to a sealant film including a heat-seal layer; and an adjacent layer adjacent to the heat-seal layer, wherein the sealant film satisfies the following requirement (1),

the heat-seal layer contains an olefin polymer (B) satisfying the following requirement (2) and a propylene polymer (A) satisfying the following requirement (3), and

the adjacent layer contains 1 to 70% by mass of the propylene polymer (A) satisfying the following requirement (3) and 30 to 99% by mass of the olefin polymer (B) satisfying the following requirement (2), and contains 0 to 70% by mass of a propylene polymer (B2) in the olefin polymer (B), provided that (A) + (B) = 100% by mass,

requirement (1): the sealant film is a stretched film or a non-stretched film,

requirement (2): a melting point is less than 120°C or is not observed, and

requirement (3): a melting point is 121°C or more and 170°C or less.

Advantageous Effects of Invention

The laminate of the present invention is characterized in that the content of the propylene polymer is high, a high heat-seal strength is achieved, and the peeling mode is controlled, whereby the peeling energy is high.

Description of Embodiments

A sealant film of the present invention is a film including a heat-seal layer and an adjacent layer.

A laminate of the present invention includes a sealant film and a substrate film.

The laminate of the present invention has a structure in which the sealant film and the substrate film are laminated. The sealant film is a film that imparts heat-fusibility to the laminate of the present invention, and the substrate film is a film that supports the sealant film.

<Sealant film>

The sealant film of the present invention is a sealant film which includes a heat-seal layer and an adjacent layer adjacent to the heat-seal layer, wherein the sealant film satisfies the following requirement (1),

the heat-seal layer contains an olefin polymer (B) satisfying the following requirement (2) and a propylene polymer (A) satisfying the following requirement (3), and
the adjacent layer contains 1 to 70% by mass of the propylene polymer (A) satisfying the following requirement (3) and 30 to 99% by mass of the olefin polymer (B) satisfying the following requirement (2), and contains 0 to 70% by mass of a propylene polymer (B2) in the olefin polymer (B), provided that (A) + (B) = 100% by mass,
requirement (1): the sealant film is a stretched film or a non-stretched film,
requirement (2): a melting point is less than 120°C or is not observed, and
requirement (3): a melting point is 121°C or more and 170°C or less.

The sealant film of the present invention preferably has a heat-seal strength (peeling strength) of 6 N/15 mm or more at 100°C when the heat-seal layers are fused to each other, and achieves high peeling energy by appropriately controlling the peeling mode.

A method for measuring the heat-seal strength and the peeling energy and a method for determining the peeling mode will be described in detail in Examples, but the peeling energy is obtained as an area of a peeling curve (S-S curve) at the time of peeling. That is, the higher the heat-seal strength and the longer the tensile distance (strain amount) from the start of peeling to the occurrence of breakage, the higher the peeling energy.

In the sealant film according to the present invention, the heat-seal strength at a temperature of 100°C, a pressure of 0.1 MPa, and a pressure time of 0.5 seconds when the heat-seal layers are adhered to each other is 6 N/15 mm or more, preferably 8 N/15 mm or more, and more preferably 10 N/15 mm or more. When the heat-seal strength is 6 N/15 mm or more, a laminate achieving high peeling energy can be obtained.

In the sealant film according to the present invention, it is preferable that the peeling mode is cohesive failure. As a result, the tensile distance (strain amount) from the start of peeling to the occurrence of breakage becomes longer, and a laminate achieving high peeling energy can be obtained.

The peeling energy at 110°C is preferably 20 mJ or more, still more preferably 40 mJ or more, still more preferably 80 mJ or more, and particularly preferably 100 mJ. The high peeling energy can be achieved by having a high heat-seal strength and/or the peeling mode being cohesive failure.

The sealant film of the present invention can be obtained, for example, by setting the total thickness of the heat-seal layer and the adjacent layer to 0.1 um or more.

The thickness of the sealant film of the present invention is usually 0.1 to 50 pm, preferably 0.3 to 40 pm, more preferably 0.5 to 25 pm, and particularly preferably 1 to 9 $\mu$m, and when there are a plurality of sealant films, each sealant film preferably has the above thickness.

Further, the thickness of the heat-seal layer constituting the sealant film of the present invention is usually 0.1 to 20 pm. Here, the lower limit thereof is preferably 0.2 um, more preferably 0.3 um, and particularly preferably 0.4 um. Further, the upper limit thereof is preferably 10 pm, more preferably 8 pm, and particularly preferably 5 pm.

Further, the thickness of the adjacent layer adjacent to the heat-seal layer constituting the sealant film of the present invention is usually 0.1 to 30 $\mu$m. Here, the lower limit thereof is preferably 0.2 um, more preferably 0.4 um, and particularly preferably 0.6 um. Further, the upper limit thereof is preferably 10 pm, more preferably 8 pm, and particularly preferably 6 pm.

The total thickness of the sealant film is usually 50% or less, preferably 40% or less, and more preferably 35% or less of the total thickness of the laminate including the substrate layer described below. This brings the laminate closer to a single material mainly containing the substrate layer, and has the advantage of making recycling easier.

The sealant film of the present invention is preferably a stretched film or a non-stretched film, and more preferably a stretched film.

Further, the stretched film may be any of a uniaxially stretched film and a biaxially stretched film, but the biaxially stretched film is particularly preferable because it is excellent in balance of strength and rigidity in the longitudinal and transverse directions.

The sealant film of the present invention is preferably a stretched film which is formed as a film and then subjected to a stretching treatment. When the sealant film is a stretched film, it is possible to provide a laminate excellent in stiffness (rigidity).

As a method for stretching the sealant film, a known method for producing a stretched film can be used. Specific examples thereof include roll stretching, tenter stretching, tubular stretching, and a combination of these stretching methods. The stretching (area) ratio is 1.5 to 50 times, and preferably 2 to 40 times.

The sealant film of the present invention may, as needed, contain additives such as other resins, tackifiers, weathering stabilizers, heat stabilizers, antistatic agents, anti-slipping agents, anti-blocking agents, lubricants, pigments, dyes, plasticizers, antiaging agents, hydrochloric acid absorbers, and antioxidants as long as the object of the present invention is not impaired.

<<Heat-seal layer>>

The heat-seal layer constituting the sealant film of the present invention is a layer containing an olefin polymer (B) satisfying the above requirement (2) and a propylene polymer (A) satisfying the above requirement (3).

The heat-seal layer according to the present invention preferably contains 0.1 to 80% by mass of the olefin polymer (B). Here, the lower limit of the content of the olefin polymer (B) is more preferably 5% by mass, still more preferably 8% by mass, and particularly preferably 10% by mass, and the upper limit thereof is more preferably 64% by mass, still more preferably 50% by mass, and particularly preferably 40% by mass.

The heat-seal layer according to the present invention preferably contains 20 to 99.9% by mass of the propylene polymer (A). Here, the lower limit of the content of the olefin polymer (B) is more preferably 36% by mass, still more preferably 50% by mass, and particularly preferably 60% by mass, and the upper limit thereof is more preferably 95% by mass, still more preferably 92% by mass, and particularly preferably 90% by mass, provided that the total amount of (A) + (B) is 100% by mass.

By containing the olefin polymer (B) in the above range, the heat-seal layer according to the present invention is excellent in balance between low-temperature sealability and blocking property. When the proportion of the olefin polymer (B) is lower than the above range, the low-temperature sealability is reduced, and when the proportion is higher than the above range, the blocking property is deteriorated.

<Olefin polymer (B)>

The olefin polymer (B) forming the heat-seal layer according to the present invention is not particularly limited as long as it is a polymer containing an olefin with a melting point less than 120°C or not observed. When the melting point of the olefin polymer (B) is within the above range, a laminate excellent in low-temperature heat-sealability can be obtained.

Examples of the olefin polymer (B) according to the present invention include homopolymers of an $\alpha$-olefin, copolymers of the $\alpha$-olefin with another $\alpha$-olefin, and copolymers of the $\alpha$-olefin with a monomer other than $\alpha$-olefin.

Specific examples of the olefin polymers (B) according to the present invention include ethylene polymers which are mainly ethylene [hereinafter, sometimes referred to as "ethylene polymer (B1)" in the present invention] such as homopolymers of ethylene and copolymers of ethylene with an $\alpha$-olefin having 3 or more carbon atoms (ethylene·$\alpha$-olefin polymer), propylene polymers which are mainly propylene [hereinafter, sometimes referred to as "propylene polymer (B2)" in the present invention] such as copolymers of propylene with ethylene and/or an $\alpha$-olefin having 4 or more carbon atoms (propylene·$\alpha$-olefin polymer), and 1-butene polymers which are mainly 1-butene [hereinafter, sometimes referred to as "butene polymer (B3)"] such as homopolymers of 1-butene and copolymers of 1-butene with ethylene, propylene or $\alpha$-olefin having 5 or more carbon atoms (1-butene·$\alpha$-olefin polymer).

Among these polymers, the propylene polymer (B2) and the butene polymer (B3) are more preferable, the propylene polymer (B2) is still more preferable, and the propylene·1-butene polymer is particularly preferable when used in the heat-seal layer.

The propylene polymer (B2) and butene polymer (B3) hardly deteriorate film blocking property even when their melting points are low.

<Ethylene polymer (B1)>

Examples of the $\alpha$-olefin having 3 or more carbon atoms copolymerized with ethylene in the ethylene polymer (B1) according to the present invention include $\alpha$-olefins having 3 to 20 carbon atoms, such as propylene, 1-butene, 1-pentene, 3-methyl-1-butene, 4-methyl-1-pentene, 1-hexene, 1-octene, 1-decene, 1-dodecene, and 1-tetradecene. 1-Butene, 1-hexene, and 1-octene are excellent in the balance of strength, flexibility, and low-temperature sealability improving performance, and thus are preferred. The α-olefin copolymerized with ethylene is not limited to one kind, and may be two or more kinds of α-olefins.

Specific examples of the ethylene polymer (B1) according to the present invention include high-pressure low-density polyethylene, linear low-density polyethylene, and ethylene·α-olefin copolymers.

<Propylene polymer (B2)>

Examples of the α-olefin having 4 or more carbon atoms copolymerized with propylene in the propylene polymer (B2) according to the present invention include any of the α-olefins other than propylene. The α-olefin copolymerized with propylene is not limited to one kind, and may be two or more kinds of α-olefins (including ethylene). The propylene polymer (B2) is preferably a propylene·ethylene copolymer, a propylene·1-butene copolymer, or a propylene·ethylene·1-butene copolymer. The propylene·ethylene copolymer and the propylene·1-butene copolymer are excellent in flexibility and can promote stress relaxation. The propylene·1-butene copolymer has high crystallinity even when it has a low melting point and is less likely to deteriorate film blocking property.

<Butene polymer (B3)>

Examples of the α-olefin having 5 or more carbon atoms copolymerized with 1-butene in the butene polymer (B3) according to the present invention include any of the α-olefins other than propylene and 1-butene. The α-olefin copolymerized with 1-butene is not limited to one kind, and may be two or more kinds of α-olefins (including ethylene and propylene). The butene polymer (B3) is preferably a 1-butene·ethylene copolymer or a 1-butene·propylene copolymer. The 1-butene·ethylene copolymer and the 1-butene·propylene copolymer have a low melting point, are excellent in low-temperature heat-sealability, and hardly deteriorate film blocking property.

The olefin polymer (B) according to the present invention may be one kind of polymer or two or more kinds of polymers.

The olefin polymer (B) according to the present invention has an MFR measured under the conditions of 230°C and 2.16 kg load in accordance with ASTM D1238 preferably in the range of 0.1 to 100 g/10 min, and more preferably 1 to 20 g/10 min.

Further, the MFR of the olefin polymer (B) according to the present invention measured under the conditions of 190°C and 2.16 kg load in accordance with ASTM D1238 is preferably in the range of 0.1 to 100 g/10 min, and more preferably 0.5 to 50 g/10 min, and still more preferably 1 to 20 g/10 min.

<Propylene polymer (A) >

The propylene polymer (A) forming the heat-seal layer according to the present invention is not particularly limited as long as it has a melting point of 121°C or more and 170°C or less, and examples thereof include a homopolymer of propylene [homoPP: also referred to as hPP], a random copolymer of propylene with another ethylene and/or [random PP: also referred to as rPP], and a block copolymer [block PP: also referred to as bPP].

The propylene polymer (A) according to the present invention has an MFR measured under the conditions of 230°C and 2.16 kg load in accordance with ASTM D1238 preferably in the range of 0.1 to 100 g/10 min, and more preferably 0.5 to 50 g/10 min, and still more preferably 1 to 20 g/10 min.

The heat-seal layer according to the present invention contains the propylene polymer (A), and thus is excellent in heat-seal strength.

The propylene polymer (A) according to the present invention can be produced by polymerizing monomers by a known polymerization method such as a gas phase method, a bulk method, or a slurry method in the presence of a known catalyst such as a Ziegler-Natta catalyst or a metallocene catalyst. Examples of a method for adjusting the melting point to 121°C or more and 170°C or less include a method of controlling polymerization conditions such as a monomer feed amount to control the comonomer content to less than 20 mol% in the case of polymerization with a Ziegler-Natta catalyst, or to less than 10 mol% in the case of polymerization with a metallocene catalyst, whereby a polymer having a target melting point can be obtained.

The olefin polymer (B) according to the present invention may be one kind of polymer or two or more kinds of polymers.

When used for heat-seal layers, the propylene polymer (A) is preferably a random copolymer obtained by copolymerizing propylene with ethylene and/or an α-olefin having 4 or more carbon atoms. In order to improve the balance between blocking property and low-temperature sealability, it is preferable to copolymerize propylene with ethylene and an α-olefin having 4 or more carbon atoms, and a propylene·ethylene·1-butene copolymer is particularly preferable.

The propylene polymer (A) used in the heat-seal layer preferably has a melting point of 121 to 155°C, more preferably 130 to 145°C.

<<Adjacent layer>>

The adjacent layer constituting the sealant film of the present invention is a layer for relaxing stress concentration at the time of peeling after heat-sealing the heat-seal layer.

The adjacent layer according to the present invention contains 1 to 70% by mass, preferably 3 to 50% by mass, and more preferably 5 to 45% by mass of the propylene polymer (A), and 30 to 99% by mass, preferably 50 to 97% by mass, and more preferably 55 to 95% by mass of the olefin polymer (B) satisfying the requirement (2), provided that (A) + (B) = 100% by mass. The olefin polymer (B) contains the propylene polymer (B2) in the range of 0 to 70% by mass, preferably 0 to 60% by mass, more preferably 1 to 40% by mass.

When the adjacent layer according to the present invention contains, for example, the propylene polymer (A) in the above range, the heat-seal energy at the time of peeling can be improved, and the peeling appearance and peeling energy of the film can be improved.

<Propylene polymer (A)>

The propylene polymer (A) for forming the adjacent layer according to the present invention is the same polymer as the propylene polymer (A) for forming the heat-seal layer. However, the propylene polymer (A) forming the adjacent layer and the propylene polymer (A) forming the heat-seal layer may be polymers having the same physical properties or polymers having different physical properties.

The propylene polymer (A) used in the adjacent layer is preferably a propylene homopolymer or a random copolymer. The propylene homopolymer is excellent in strength and has a high melting point, and is thus preferable in terms of preventing thermal shrinkage of the laminate at the time of heat-sealing. The random copolymer is excellent in flexibility, and is thus preferable in terms of promoting stress concentration.

<Olefin polymer (B)>

The olefin polymer (B) for forming the adjacent layer according to the present invention is the same polymer as the olefin polymer (B) for forming the heat-seal layer. However, the olefin polymer (B) forming the adjacent layer and the olefin polymer (B) forming the heat-seal layer may be polymers having the same physical properties or polymers having different physical properties.

As described above, the olefin polymer (B) forming the adjacent layer preferably contains the propylene polymer (B2). Since the propylene polymer (B2) is compatible with the propylene polymer (A), it is possible to improve flexibility while maintaining strength. The propylene polymer (B2) is preferably a propylene·ethylene copolymer or a propylene·ethylene·$\alpha$-olefin copolymer, more preferably a propylene·ethylene·$\alpha$-olefin copolymer, and particularly preferably a propylene·ethylene·1-butene copolymer. When the polymer contains ethylene, the polymer is excellent in flexibility and can promote stress relaxation of the adjacent layer. When the polymer contains an $\alpha$-olefin, the compatibility between the propylene polymer (B2) and the propylene polymer (A) can be improved.

The propylene·ethylene·$\alpha$-olefin copolymer preferably has a content of constituent units derived from propylene (hereinafter, simply referred to as "propylene content") in the range of 40 to 99 mol%, more preferably 60 to 98 mol%, an ethylene content in the range of 1 to 30 mol%, more preferably 1 to 20 mol%, and an $\alpha$-olefin content in the range of 1 to 30 mol%, more preferably 1 to 25 mol%, provided that the total of the propylene content, the ethylene content, and the $\alpha$-olefin content is 100 mol%.

Since the adjacent layer according to the present invention contains the olefin polymer (B), the heat-seal strength is excellent, the peeling mode can be controlled, and the peeling energy is excellent.

<Laminate>

The laminate of the present invention is formed by laminating the adjacent layer forming the sealant film of the present invention and the substrate film described below.

<<Substrate film>>

The substrate film constituting the laminate of the present invention is at least one selected from a biaxially stretched polypropylene film and a non-stretched polypropylene film.

The thickness of the substrate film according to the present invention is usually in the range of 10 to 200 pm, preferably 11 to 100 pm, more preferably 12 to 50 pm, and particularly preferably 12 to 19 pm.

The substrate film according to the present invention is preferably a biaxially stretched polypropylene film.

In the laminate, the substrate film is preferably thicker than a sealant layer (sealant film) composed of the heat-seal layer and an adjacent layer adjacent to the heat-seal layer. This brings the laminate closer to a single material, and has the advantage of making recycling easier. The thickness of the substrate film is usually 50% or more, preferably 60% or more, more preferably 65% or more, and particularly preferably 68% or more of the entire laminate.

When the thickness of the substrate film is defined as x and the thickness of the adjacent layer is defined as y, the thicknesses of the substrate film and the adjacent layer preferably satisfy x > y. This further improves the rigidity of the resulting laminate.

<Polypropylene>

Examples of polypropylene constituting the polypropylene film forming the substrate film according to the present invention include homopolymers of propylene and copolymers having propylene as the main monomer. In the case of copolymer, it may be a random copolymer or a block copolymer. Examples of the monomer copolymerized with propylene include an $\alpha$-olefin other than propylene and diene compounds. The propylene content (constituent unit derived from propylene) in polypropylene is 85 to 100 mol%, preferably 90 to 99.5 mol%, and the content of the other monomer is 0 to 15 mol%, preferably 0.5 to 10 mol%.

Examples of the other $\alpha$-olefin copolymerized with propylene include $\alpha$-olefins having 2 or 4 to 20 carbon atoms, such as ethylene, 1-butene, 1-pentene, 3-methyl-1-butene, 4-methyl-1-pentene, 1-hexene, 1-octene, 1-decene, 1-dodecene, and 1-tetradecene.

The polypropylene according to the present invention has an MFR measured under the conditions of 230°C and 2.16 kg load in accordance with ASTM D1238 preferably in the range of 0.1 to 10 g/10 min, and more preferably 0.5 to 8 g/10 min, and a melting point (Tm) of preferably 120 to 165°C, and more preferably 135 to 150°C.

Specific examples of the polypropylene according to the present invention include a propylene homopolymer, a propylene·ethylene random copolymer, a propylene·1-butene random copolymer, a propylene·1-butene·ethylene random copolymer, a propylene·1-hexene random copolymer, a propylene·3-methyl-1-butene random copolymer, and a propylene·4-methyl-1-pentene random copolymer. The polypropylene may be used alone or in combination of two or more kinds thereof.

The polypropylene according to the present invention can be produced by polymerizing monomers by a known polymerization method such as a gas phase method, a bulk method, or a slurry method in the presence of a known catalyst such as a Ziegler-Natta catalyst or a metallocene catalyst.

The polypropylene according to the present invention may be the same polymer as the propylene polymer (A) and/or the propylene·$\alpha$-olefin polymer (B2) contained in the sealant film.

The substrate film is at least one selected from a non-stretched polypropylene film (CPP film) obtained by subjecting a film formed of the polypropylene to no stretching treatment and a biaxially stretched polypropylene film (OPP film) obtained by subjecting the film to a biaxial stretching treatment. As the stretching method, a known method for producing a stretched film can be used. Specific examples thereof include roll stretching, tenter stretching, tubular stretching, and a combination of these stretching methods. The stretching (area) ratio is usually 1.5 to 50 times, and preferably 2 to 40 times.

The substrate film according to the present invention may be formed of a single layer or a plurality of layers.

The substrate film according to the present invention may contain additives such as other resins, tackifiers, weathering stabilizers, heat stabilizers, antistatic agents, anti-slipping agents, anti-blocking agents, lubricants, pigments, dyes, plasticizers, antiaging agents, hydrochloric acid absorbers, and antioxidants.

The laminate of the present invention contains 70% by mass or more of a propylene polymer and/or a 1-butene polymer, when the total mass of the sealant film and the substrate film is 100% by mass. That is, the laminate of the present invention contains the propylene polymer in an amount of preferably 50% by mass, more preferably 60% by mass or more, still more preferably 65% by mass or more, and particularly preferably 80% by mass or more, when the total mass of the sealant film and the substrate film is 100% by mass. This brings the laminate closer to a single material, and has the advantage of making recycling easier.

Examples of the propylene polymer according to the present invention include homopolymers of propylene, and copolymers of propylene with ethylene or an $\alpha$-olefin having 4 to 20 carbon atoms. Examples of the $\alpha$-olefin having 4 to 20 carbon atoms include 1-butene, 1-pentene, 3-methyl-1-butene, 4-methyl-1-pentene, 1-hexene, 1-octene, 1-decene, 1-dodecene, and 1-tetradecene.

Examples of the 1-butene polymer according to the present invention include homopolymers of 1-butene and copolymers of 1-butene with ethylene, propylene, or an $\alpha$-olefin having 5 to 20 carbon atoms. Examples of the $\alpha$-olefin having 5 to 20 carbon atoms include 1-pentene, 3-methyl-1-butene, 4-methyl-1-pentene, 1-hexene, 1-octene, 1-decene, 1-dodecene, and 1-tetradecene.

The propylene polymer and the 1-butene polymer according to the present invention may be the same as the propylene polymer (B2) or the butene polymer (B3) contained as the olefin polymer (B) in the sealant film of the present invention, may be the same as the polymer contained as polypropylene in the substrate film, or may be a polymer contained in a film other than the sealant film and the substrate film.

In order to impart a specific function to the laminate of the present invention, various layers may be included in addition to the sealant film of the present invention and the substrate film. For example, the laminate of the present invention may include functional material layers such as a printing layer, a barrier layer, and an embossing layer.

Examples of the functional material layer include a resin film on which an inorganic compound or an inorganic oxide is vapor-deposited, a metal foil, a coated film of a resin having a special function, and a resin film on which a pattern is printed.

It is possible to use a resin film similar to the polypropylene film used for the substrate film as the resin film to be used here, and furthermore, similar plastic compounding agents or additives may be added in an arbitrary amount according to the purpose within a range that does not adversely affect other performance.

The resin film according to the present invention can be produced using, for example, one or more resins selected from the group of resins similar to those used for substrate films, by conventional film forming methods such as extrusion, cast molding, T-die, cutting, and inflation, or by multilayer co-extrusion film forming method using two or more resins. Furthermore, from the viewpoint of strength, dimensional stability, and heat resistance of the film, the film may be stretched in a uniaxial or biaxial direction by utilizing, for example, a tenter system or a tubular system.

When the laminate of the present invention includes a barrier layer, the laminate can be produced by a method for producing the laminate including a step of forming the barrier layer as a layer in the sealant film or the substrate film by metal vapor deposition, a coating method or a co-extrusion method and a step of laminating the sealant film and the substrate film.

Examples of the embodiment of the laminate of the present invention include, but are not limited to, a two layer structure of sealant film/substrate film and a three layer structure of sealant film/substrate film/sealant film. An adhesive layer may be provided between the sealant film and the substrate film.

The sealant film and the substrate film may be laminated by co-extrusion, or may be laminated by a general lamination method such as extrusion lamination or dry lamination. The sealant film and the substrate film may be co-extruded and then a substrate film may be further laminated thereon.

The laminate of the present invention may be produced by laminating the sealant film and the substrate film via an adhesive layer by, for example, dry lamination, non-solvent lamination, or sand lamination, or by laminating the sealant film and the substrate film by melt extrusion lamination. Among them, a method of laminating by dry lamination or melt extrusion lamination is preferable.

The laminate produced by the above method can be stretched. As the stretching method, a known method for producing a stretched film can be used. Specific examples thereof include roll stretching, tenter stretching, tubular stretching, and a combination of these stretching methods. The stretching (area) ratio is 1.5 to 50 times, and preferably 2 to 40 times.

As described above, the laminate of the present invention has a high content of the propylene copolymer, and further, is excellent in low-temperature heat-sealability and excellent in low-temperature heat-seal strength, and has a controlled peeling mode, and has a high peeling energy.

A package can be obtained from the laminate of the present invention. The package formed from the laminate of the present invention is excellent in low-temperature heat-sealability and resistance to bag breakage.

For example, a package can be produced by placing the heat-seal layers of the sealant film of the laminate of the present invention such that the they are face-to-face, or placing the heat-seal layers of the sealant film of the laminate film and another film such that they are face-to-face, and subsequently heat-sealing from the outer side of the film at least a part of the periphery of the placed film such that a package having a desired shape can be obtained. In addition, heat-sealing the entire periphery of the placed film can produce a bag-shaped container that is tightly sealed. Combining this bag-shaped container molding process with the filling process of the contents, that is, filling the contents after heat-sealing the bottom and sides of the bag-shaped container, and then heat-sealing the upper portion, allows the package to be produced. This package can be used in an automatic packaging apparatus for solid such as snacks and breads, powder, or liquid materials.

In addition, a container in which a content is packaged can be obtained by filling, for example, a container in which the laminate of the present invention is previously formed into a cup shape by, for example, vacuum molding or pressure molding, a container obtained by, for example, injection molding, or a container formed of, for example, a paper substrate with the content, covering the container with the laminate of the present invention as a lid material, and heat-sealing an upper portion or a side portion of the container. The container is suitably used for packaging instant noodles, fermented soybean paste, jelly, pudding, and snack confectionery, for example.

A recycled product of the laminate of the present invention or the package including the laminate of the present invention can also be effectively used. The molded product, which is a recycled product of the laminate or the package of the present invention, can reduce the amount of a newly polymerized plastic to be used, and can contribute to a reduction in environmental load.

Examples

Hereinafter, the present invention will be described in more detail with reference to Examples, but the present invention is not limited to these Examples.
The physical properties shown in Examples were measured by the following methods.

[Heat-seal strength]

Surfaces of the heat-seal layers of the sealant films of the two laminates were placed on each other, or two single-layer films were placed on each other, and fused at 90°C, 100°C, 110°C or 120°C under a pressure of 0.1 MPa for 0.5 seconds with a seal bar width of 5 mm, and then allowed to cool. Then, test pieces of 15 mm width each were cut from the test bodies obtained by heat-sealing, and the peeling strength of each test piece was measured when the heat-sealed portion was peeled off at a crosshead speed of 300 mm/min, and the numerical value thereof was taken as the heat-seal strength.

[Peeling appearance]

After the heat-sealed portion was peeled off, the peeled state of the sample was confirmed, and the occurrence of cohesive peeling, film breakage, and film tearing was observed.
"Peel" indicates that peeling occurred only at the interface, "Tear" indicates that the edge of the sealed surface was broken, and "Δ" indicates that "Peel" and "Tear" were mixed.

[Peeling energy]

According to Kazuo Hishinuma, "Proposal of measurement and evaluation method of peeling energy on the sealing surface of thermal sealing (heat-seal)," Journal of the Adhesion Society of Japan, 2006, Vol. 42, No. 4, pp. 146-152, the peeling energy S was calculated by the following formula.

[Math. 1]

$$S = \sum_{L=0}^{Ld} F \cdot \Delta l$$

S: peeling energy (mJ)
F: tensile strength (N) at each separation distance point
Δl: unit distance (mm) for energy calculation
Lt: tensile distance (mm) at the time of occurrence of breakage

The following polymers were used in Examples and Comparative Examples.

<Heat-seal layer>

<Propylene polymer (A)>

terPP: propylene terpolymer (A-1) was used as the propylene polymer (A).
MFR (230°C, 2.16 kg load, in accordance with ASTM D1238): 5.5 g/10 min, melting point: 132°C, propylene content: 92 mol%, ethylene content: 3 mol%, 1-butene content: 5 mol%.

<Olefin polymer (B)>

PER (B2-1): propylene·ethylene copolymer was used as the olefin polymer (B).
MFR (230°C, 2.16 kg load, in accordance with ASTM D1238): 3 g/10 min, MFR (190°C, 2.16 kg load, in accordance with ASTM D1238): 1.4 g/10 min, melting point: 108°C, propylene content: 78 mol%, ethylene content: 22 mol%.

<Adjacent layer>

<Propylene polymer (A)>

hPP (A-2): homopolypropylene (propylene homopolymer) was used as the propylene polymer (A).
MFR (230°C, 2.16 kg load, in accordance with ASTM D1238): 3.0 g/10 min, melting point: 161°C.

<Olefin polymer (B)>

The following HP-LDPE (B1-1), L-LDPE (B1-2), EBR (B1-3), EBR (B1-4), and EBR (B1-5) were used as the olefin polymer (B) .

<HP-LDPE (B1-1)>

A high-pressure low-density polyethylene (Mirason (R) F9673P, manufactured by DOW-MITSUI POLYCHEMICALS CO., LTD.) was used.
MFR (190°C, 2.16 kg load, in accordance with ASTM D1238): 1.1 g/10 min, density: 918 kg/m3, melting point: 108°C.

<L-LDPE (B1-2)>

A linear low-density polyethylene (Evolue (R) SP0510, manufactured by Prime Polymer Co., Ltd.) was used.
MFR (190°C, 2.16 kg load, in accordance with ASTM D1238): 1.2 g/10 min, density (in accordance with JIS K7112): 903 kg/m3, melting point: 98°C.

<EBR (B1-3)>

Ethylene·1-butene copolymer (TAFMER (R) A-0585N, manufactured by Mitsui Chemicals, Inc.)

MFR (190°C, 2.16 kg load, in accordance with ASTM D1238): 0.5 g/10 min, density (in accordance with ASTM D1505): 885 kg/m3, melting point: 66°C.

<EBR (B1-4)>

Ethylene·1-butene copolymer (TAFMER (R) A-1085S, manufactured by Mitsui Chemicals, Inc.)

MFR (190°C, 2.16 kg load, in accordance with ASTM D1238): 1.2 g/10 min, density (in accordance with ASTM D1505): 885 kg/m3, melting point: 66°C.

<EBR (B1-5)>

Ethylene·1-butene copolymer (TAFMER (R) A-4085S, manufactured by Mitsui Chemicals, Inc.)

MFR (190°C, 2.16 kg load, in accordance with ASTM D1238): 3.6 g/10 min, density (in accordance with ASTM D1505): 885 kg/m3, melting point: 66°C.

<Propylene polymer (B2)>

As the propylene polymer (B2), there was used a propylene·ethylene·1-butene copolymer (hereinafter referred to as "PEBR (B2-2)") prepared in accordance with the method described in the Example section of "Third Invention" described in WO2006/57361 pamphlet, having an ethylene content of 14 mol%, a propylene content of 67 mol%, a 1-butene content of 19 mol%, no melting point (Tm) as measured by a conventional method, and an MFR (230°C, 2.16 kg load, in accordance with ASTM D1238) of 6 g/10 min.
There were kneaded 85% by mass of PEBR (B2-2) and 15% by mass of a propylene homopolymer (A-3) having a melting point (Tm) of 160°C as measured by a reheating method and an MFR (230°C, 2.16 kg load, in accordance with ASTM D1238) of 7 g/10 minutes, and the mixture was used as a pelletized propylene resin composition (B2-3).

<PER (B2-4)>

Propylene·ethylene copolymer (VISTAMAXX (R) 6102, manufactured by ExxonMobil Chemical Company)

MFR (230°C, 2.16 kg load, in accordance with ASTM D1238): 3 g/10 min, melting point: 108°C.

<Substrate film>

The above hPP (A-2) was used.

[Example 1]

A composition for forming the heat-seal layer was prepared by blending 30% by mass of PBR (B2-1) and 70% by mass of terPP (A-1).
A composition for forming the adjacent layer was prepared by blending 40% by mass of hPP (A-2) and 60% by mass of HP-LDPE (B1-1).
By co-extruding hPP (A-2) corresponding to the composition for the preparation of the heat-seal layer, the composition for the preparation of the adjacent layer and the substrate film using three extruders connected with T-dies, an unstretched laminated film was obtained in which a sealant film including the heat-seal layer and the adjacent layer and a substrate film formed of hPP (A-2) were laminated in the order of sealant film (heat-seal layer/adjacent layer)/substrate film.
The obtained unstretched laminated film was biaxially stretched by a batch-type biaxial stretching machine at a stretching temperature of 158°C and a stretching rate of 238% to vertical × horizontal of 5 times × 8 times (stress relaxation after stretching: 30 seconds) to produce a laminate in which a sealant film including two layers of a heat-seal layer having a thickness of 3 um and an adjacent layer having a thickness of 3 um and a substrate film having a thickness of 14 um were biaxially stretched.
The physical properties of the obtained laminate are shown in Table 1.

[Example 2]

A laminate was obtained in the same manner as in Example 1, except that 40% by mass of hPP (A-2) and 60% by mass of L-LDPE (B1-2) were blended to prepare a composition for forming the adjacent layer. The physical properties of the obtained laminate are shown in Table 1.

[Example 3]

A laminate was obtained in the same manner as in Example 1, except that 30% by mass of hPP (A-2), 60% by mass of L-LDPE (B1-2), and 10% by mass of the propylene resin composition (B2-3) were blended to prepare a composition for forming the adjacent layer. The physical properties of the obtained laminate are shown in Table 1.

[Example 4]

A laminate was obtained in the same manner as in Example 1, except that 20% by mass of hPP (A-2), 60% by mass of L-LDPE (B1-2), and 20% by mass of the propylene resin composition (B2-3) were blended to prepare a composition for forming the adjacent layer. The physical properties of the obtained laminate are shown in Table 1.

[Example 5]

A laminate was obtained in the same manner as in Example 1, except that 10% by mass of hPP (A-2), 60% by mass of L-LDPE (B1-2), and 30% by mass of the propylene resin composition (B2-3) were blended to prepare a composition for forming the adjacent layer. The physical properties of the obtained laminate are shown in Table 1.

[Example 6]

A laminate was obtained in the same manner as in Example 1, except that 20% by mass of hPP (A-2), 60% by mass of EBR (B1-3), and 20% by mass of the propylene resin composition (B2-3) were blended to prepare a com-

**EP 4 253 045 A1**

position for forming the adjacent layer. The physical properties of the obtained laminate are shown in Table 1.

[Example 7]

A laminate was obtained in the same manner as in Example 1, except that 80% by mass of EBR (B1-3) and 20% by mass of the propylene resin composition (B2-3) were blended to prepare a composition for forming the adjacent layer. The physical properties of the obtained laminate are shown in Table 1.

[Example 8]

A laminate was obtained in the same manner as in Example 1, except that 40% by mass of hPP (A-2) and 60% by mass of EBR (B1-4) were blended to prepare a composition for forming the adjacent layer. The physical properties of the obtained laminate are shown in Table 1.

[Example 9]

A laminate was obtained in the same manner as in Example 1, except that 20% by mass of hPP (A-2), 60% by mass of EBR (B1-4), and 20% by mass of the propylene resin composition (B2-3) were blended to prepare a composition for forming the adjacent layer. The physical properties of the obtained laminate are shown in Table 2.

[Example 10]

A laminate was obtained in the same manner as in Example 1, except that 60% by mass of EBR (B1-4) and 40% by mass of the propylene resin composition (B2-3) were blended to prepare a composition for forming the adjacent layer. The physical properties of the obtained laminate are shown in Table 2.

[Example 11]

A laminate was obtained in the same manner as in Example 1, except that 40% by mass of hPP (A-2), 40% by mass of EBR (B1-4), and 20% by mass of the propylene resin composition (B2-3) were blended to prepare a composition for forming the adjacent layer. The physical properties of the obtained laminate are shown in Table 2.

[Example 12]

A laminate was obtained in the same manner as in Example 1, except that 20% by mass of hPP (A-2), 40% by mass of EBR (B1-4), and 40% by mass of the propylene resin composition (B2-3) were blended to prepare a composition for forming the adjacent layer. The physical properties of the obtained laminate are shown in Table 2.

[Example 13]

A laminate was obtained in the same manner as in Example 1, except that 40% by mass of EBR (B1-4) and 60% by mass of the propylene resin composition (B2-3) were blended to prepare a composition for forming the adjacent layer. The physical properties of the obtained laminate are shown in Table 2.

[Example 14]

A laminate was obtained in the same manner as in Example 1, except that 80% by mass of EBR (B1-4) and 20% by mass of the propylene resin composition (B2-3) were blended to prepare a composition for forming the adjacent layer. The physical properties of the obtained laminate are shown in Table 2.

[Example 15]

A laminate was obtained in the same manner as in Example 1, except that 60% by mass of EBR (B1-5) and 40% by mass of the hPP (A-2) were blended to prepare a composition for forming the adjacent layer. The physical properties of the obtained laminate are shown in Table 2.

12

[Example 16]

A laminate was obtained in the same manner as in Example 1, except that 20% by mass of hPP (A-2), 60% by mass of EBR (B1-5), and 20% by mass of the propylene resin composition (B2-3) were blended to prepare a composition for forming the adjacent layer. The physical properties of the obtained laminate are shown in Table 2.

[Example 17]

A laminate was obtained in the same manner as in Example 1, except that 80% by mass of EBR (B1-5) and 20% by mass of the propylene resin composition (B2-3) were blended to prepare a composition for forming the adjacent layer. The physical properties of the obtained laminate are shown in Table 3.

[Example 18]

A laminate was obtained in the same manner as in Example 1, except that 40% by mass of hPP (A-2), 40% by mass of EBR (B1-5), and 20% by mass of the propylene resin composition (B2-3) were blended to prepare a composition for forming the adjacent layer. The physical properties of the obtained laminate are shown in Table 3.

[Example 19]

A laminate was obtained in the same manner as in Example 1, except that 40% by mass of hPP (A-2), 48% by mass of EBR (B1-4), and 12% by mass of PER (B2-4) were blended to prepare a composition for forming the adjacent layer. The physical properties of the obtained laminate are shown in Table 3.

[Example 20]

An unstretched laminated film was obtained in the same manner as in Example 9.
The obtained unstretched laminated film was biaxially stretched by a batch-type biaxial stretching machine at a stretching temperature of 158°C and a stretching rate of 238% to vertical × horizontal of 5 times × 8 times (stress relaxation after stretching: 30 seconds) to produce a laminate in which a sealant film including two layers of a heat-seal layer having a thickness of 1 um and an adjacent layer having a thickness of 3 um and a substrate film having a thickness of 14 um were biaxially stretched.
The physical properties of the obtained laminate are shown in Table 3.

[Example 21]

An unstretched laminated film was obtained in the same manner as in Example 9.
The obtained unstretched laminated film was biaxially stretched by a batch-type biaxial stretching machine at a stretching temperature of 158°C and a stretching rate of 238% to vertical × horizontal of 5 times × 8 times (stress relaxation after stretching: 30 seconds) to produce a laminate in which a sealant film including two layers of a heat-seal layer having a thickness of 0.5 um and an adjacent layer having a thickness of 3 um and a substrate film having a thickness of 14 um were biaxially stretched.
The physical properties of the obtained laminate are shown in Table 3.

[Example 22]

An unstretched laminated film was obtained in the same manner as in Example 9.
The obtained unstretched laminated film was biaxially stretched by a batch-type biaxial stretching machine at a stretching temperature of 158°C and a stretching rate of 238% to vertical × horizontal of 5 times × 8 times (stress relaxation after stretching: 30 seconds) to produce a laminate in which a sealant film including two layers of a heat-seal layer having a thickness of 3 um and an adjacent layer having a thickness of 2 um and a substrate film having a thickness of 14 um were biaxially stretched.
The physical properties of the obtained laminate are shown in Table 3.

[Example 23]

An unstretched laminated film was obtained in the same manner as in Example 9.
The obtained unstretched laminated film was biaxially stretched by a batch-type biaxial stretching machine at a stretching temperature of 158°C and a stretching rate of 238% to vertical × horizontal of 5 times × 8 times (stress relaxation after stretching: 30 seconds) to produce a laminate in which a sealant film including two layers of a heat-seal layer having a thickness of 3 um and an adjacent layer having a thickness of 1 um and a substrate film having a thickness of 14 um were biaxially stretched.

The physical properties of the obtained laminate are shown in Table 3.

[Example 24]

An unstretched laminated film was obtained in the same manner as in Example 9.

The obtained unstretched laminated film was biaxially stretched by a batch-type biaxial stretching machine at a stretching temperature of 158°C and a stretching rate of 238% to vertical × horizontal of 5 times × 8 times (stress relaxation after stretching: 30 seconds) to produce a laminate in which a sealant film including two layers of a heat-seal layer having a thickness of 1 um and an adjacent layer having a thickness of 5 um and a substrate film having a thickness of 14 um were biaxially stretched.

The physical properties of the obtained laminate are shown in Table 3.

[Comparative Example 1]

A laminate was obtained in the same manner as in Example 1, except that 100% by mass of hPP (A-2) was used for the adjacent layer. The physical properties of the obtained laminate are shown in Table 3.

[Table 1]

| | | | | | Example 1 | Example 2 | Example 3 | Example 4 |
|---|---|---|---|---|---|---|---|---|
| Laminate | Sealant film | Heat-seal layer | Thickness [µm] | | 3 | 3 | 3 | 3 |
| | | | Component (A) | terPP (A-1) [% by mass] | 70 | 70 | 70 | 70 |
| | | | Component (B) | PBR (B2-1) [% by mass] | 30 | 30 | 30 | 30 |
| | | Adjacent layer | Thickness [µm] | | 3 | 3 | 3 | 3 |
| | | | Component (A) | hPP (A-2) [% by mass] | 40 | 40 | 30 | 20 |
| | | | Component (B) | HP-LDPE (B1-1) [% by mass] | 60 | | | |
| | | | | L-LDPE (B1-2) [% by mass] | | 60 | 60 | 60 |
| | | | | EBR (B1-3) [% by mass] | | | | |
| | | | | EBR (B1-4) [% by mass] | | | | |
| | | | | EBR (B1-5) [% by mass] | | | | |
| | | | | Propylene resin composition (B2-3) | | | 10 | 20 |
| | | | | (PEBR (B2-2) [% by mass]) | | | (8.5) | (17.0) |
| | | | | PER (B2-4) [% by mass] | | | | |
| | | Substrate film | Thickness [µm] | | 14 | 14 | 14 | 14 |
| | | | Component (A) | hPP (A-2) [% by mass] | 100 | 100 | 100 | 100 |

Table 1 (continued)

|  |  | Example 1 | Example 2 | Example 3 | Example 4 |
|---|---|---|---|---|---|
| Content of components (A) and (B) in adjacent layer | Component (A) [% by mass] | 40.0 | 40.0 | 31.5 | 23.0 |
|  | Component (B) [% by mass] | 60.0 | 60.0 | 68.5 | 77.0 |
| Heat-seal strength (N/15mm) ·pressure: 0.1MPa ·times: 0.5 seconds | 90°C | 3.4 | 2.9 | 4.5 | 8.5 |
|  | 100°C | 3.9 | 7.9 | 8.4 | 9.5 |
|  | 110°C | 2.7 | 6.2 | 9.06 | 11.6 |
|  | 120°C | 3.2 | 7.1 | 9.5 | 15.5 |
| Peeling appearance Peel: peeling occurred only at interface Tear: edge of the sealed surface was broken Δ: the above two states were mixed | 90°C | Peel | Peel | Peel | Peel |
|  | 100°C | Peel | Peel | Peel | Tear |
|  | 110°C | Peel | Peel | Tear | Tear |
|  | 120°C | Peel | Peel | Tear | Tear |
| Peeling energy (mJ) | 90°C | 34.5 | 24.7 | 30.5 | 52.5 |
|  | 100°C | 27.7 | 70 | 58.2 | 61.4 |
|  | 110°C | 31 | 61.5 | 79.4 | 49 |
|  | 120°C | 35.6 | 72.6 | 73.8 | 66.8 |

Table 1 (continued)

| | | | | | Example 5 | Example 6 | Example 7 | Example 8 |
|---|---|---|---|---|---|---|---|---|
| Laminate | Sealant film | Heat-seal layer | Thickness [µm] | | 3 | 3 | 3 | 3 |
| | | | Component (A) | terPP (A-1) [% by mass] | 70 | 70 | 70 | 70 |
| | | | Component (B) | PBR (B2-1) [% by mass] | 30 | 30 | 30 | 30 |
| | | Adjacent layer | Thickness [µm] | | 3 | 3 | 3 | 3 |
| | | | Component (A) | hPP (A-2) [% by mass] | 10 | 20 | | 40 |
| | | | Component (B) | HP-LDPE (B1-1) [% by mass] | | | | |
| | | | | L-LDPE (B1-2) [% by mass] | 60 | | | |
| | | | | EBR (B1-3) [% by mass] | | 60 | 80 | |
| | | | | EBR (B1-4) [% by mass] | | | | 60 |
| | | | | EBR (B1-5) [% by mass] | | | | |
| | | | | Propylene resin composition (B2-3) | 30 | 20 | 20 | |
| | | | | (PEBR (B2-2) [% by mass]) | (25.5) | (17.0) | (17.0) | |
| | | | | PER (B2-4) [% by mass] | | | | |
| | Substrate film | | Thickness [µm] | | 14 | 14 | 14 | 14 |
| | | | Component (A) | hPP (A-2) [% by mass] | 100 | 100 | 100 | 100 |

Table 1 (continued)

| | | Example 5 | Example 6 | Example 7 | Example 8 |
|---|---|---|---|---|---|
| Content of components (A) and (B) in adjacent layer | Component (A) [% by mass] | 14.5 | 23.0 | 3.0 | 40.0 |
| | Component (B) [% by mass] | 85.5 | 77.0 | 97.0 | 60.0 |
| Heat-seal strength (N/15mm) ·pressure: 0.1MPa ·times: 0.5 seconds | 90°C | 11.5 | 11.4 | 9.7 | 10.0 |
| | 100°C | 10.5 | 11.0 | 11.2 | 9.0 |
| | 110°C | 13.2 | 13.1 | 11.7 | 9.1 |
| | 120°C | 14.5 | 17.0 | 13.7 | 8.5 |
| Peeling appearance Peel: peeling occurred only at interface Tear: edge of the sealed surface was broken Δ: the above two states were mixed | 90°C | Δ | Peel | Δ | Peel |
| | 100°C | Tear | Δ | Δ | Peel |
| | 110°C | Tear | Tear | Δ | Peel |
| | 120°C | Tear | Tear | Δ | Peel |
| Peeling energy (mJ) | 90°C | 75 | 87.4 | 81.9 | 83.2 |
| | 100°C | 86.2 | 91.3 | 94 | 78.4 |
| | 110°C | 140 | 132 | 105 | 90 |
| | 120°C | 110 | 200 | 121 | 81.7 |

[Table 2]

| | | | | | Example 9 | Example 10 | Example 11 | Example 12 |
|---|---|---|---|---|---|---|---|---|
| Laminate | Sealant film | Heat-seal layer | Thickness [µm] | | 3 | 3 | 3 | 3 |
| | | | Component (A) | terPP (A-1) [% by mass] | 70 | 70 | 70 | 70 |
| | | | Component (B) | PBR (B2-1) [% by mass] | 30 | 30 | 30 | 30 |
| | | Adjacent layer | Thickness [µm] | | 3 | 3 | 3 | 3 |
| | | | Component (A) | hPP (A-2) [% by mass] | 20 | | 40 | 20 |
| | | | Component (B) | HP-LDPE (B1-1) [% by mass] | | | | |
| | | | | L-LDPE (B1-2) [% by mass] | | | | |
| | | | | EBR (B1-3) [% by mass] | | | | |
| | | | | EBR (B1-4) [% by mass] | 60 | 60 | 40 | 40 |
| | | | | EBR (B1-5) [% by mass] | | | | |
| | | | | Propylene resin composition (B2-3) | 20 | 40 | 20 | 40 |
| | | | | (PEBR (B2-2) [% by mass]) | (17.0) | (34.0) | (17.0) | (34.0) |
| | | | | PER(B2-4) [% by mass] | | | | |
| | Substrate film | | Thickness [µm] | | 14 | 14 | 14 | 14 |
| | | | Component (A) | hPP (A-2) [% by mass] | 100 | 100 | 100 | 100 |

EP 4 253 045 A1

Table 2 (continued)

|  |  | Example 9 | Example 10 | Example 11 | Example 12 |
|---|---|---|---|---|---|
| Content of components (A) and (B) in adjacent layer | Component (A) [% by mass] | 23.0 | 6.0 | 43.0 | 26.0 |
|  | Component (B) [% by mass] | 77.0 | 94.0 | 57.0 | 74.0 |
| Heat-seal strength (N/15mm) ·pressure: 0.1MPa ·times: 0.5 seconds | 90°C | 9.0 | 9.7 | 10.4 | 9.6 |
|  | 100°C | 12.4 | 10.7 | 12.2 | 10.9 |
|  | 110°C | 13.6 | 14.1 | 13.2 | 12.1 |
|  | 120°C | 16.3 | 16.0 | 15.6 | 16.0 |
| Peeling appearance Peel: peeling occurred only at interface Tear: edge of the sealed surface was broken Δ: the above two states were mixed | 90°C | Peel | Δ | Peel | Peel |
|  | 100°C | Peel | Δ | Peel | Δ |
|  | 110°C | Peel | Δ | Δ | Δ |
|  | 120°C | Δ | Tear | Tear | Tear |
| Peeling energy (mJ) | 90°C | 68 | 78.2 | 63.3 | 83.2 |
|  | 100°C | 119 | 120 | 99.4 | 98.3 |
|  | 110°C | 139 | 182 | 125 | 119 |
|  | 120°C | 182 | 237 | 165 | 171 |

Table 2 (continued)

| | | | | | Example 13 | Example 14 | Example 15 | Example 16 |
|---|---|---|---|---|---|---|---|---|
| Laminate | Sealant film | Heat-seal layer | Thickness [μm] | | 3 | 3 | 3 | 3 |
| | | | Component (A) | terPP (A-1) [% by mass] | 70 | 70 | 70 | 70 |
| | | | Component (B) | PBR (B2-1) [% by mass] | 30 | 30 | 30 | 30 |
| | | Adjacent layer | Thickness [μm] | | 3 | 3 | 3 | 3 |
| | | | Component (A) | hPP (A-2) [% by mass] | | | 40 | 20 |
| | | | Component (B) | HP-LDPE (B1-1) [% by mass] | | | | |
| | | | | L-LDPE (B1-2) [% by mass] | | | | |
| | | | | EBR (B1-3) [% by mass] | | | | |
| | | | | EBR (B1-4) [% by mass] | 40 | 80 | | |
| | | | | EBR (B1-5) [% by mass] | | | 60 | 60 |
| | | | | Propylene resin composition (B2-3) | 60 | 20 | | 20 |
| | | | | (PEBR (B2-2) [% by mass]) | (51.0) | (17.0) | | (17.0) |
| | | | | PER (B2-4) [% by mass] | | | | |
| | Substrate film | | Thickness [μm] | | 14 | 14 | 14 | 14 |
| | | | Component (A) | hPP (A-2) [% by mass] | 100 | 100 | 100 | 100 |

Table 2 (continued)

| | | Example 13 | Example 14 | Example 15 | Example 16 |
|---|---|---|---|---|---|
| Content of components (A) and (B) in adjacent layer | Component (A) [% by mass] | 9.0 | 3.0 | 40.0 | 23.0 |
| | Component (B) [% by mass] | 91.0 | 97.0 | 60.0 | 77.0 |
| Heat-seal strength (N/15mm) ·pressure: 0.1MPa ·times: 0.5 seconds | 90°C | 9.9 | 9.7 | 0.1 | 7.0 |
| | 100°C | 10.6 | 12.0 | 4.8 | 7.0 |
| | 110°C | 13.2 | 12.9 | 4.2 | 7.0 |
| | 120°C | 12.9 | 13.5 | 6.9 | 7.6 |
| Peeling appearance Peel: peeling occurred only at interface Tear: edge of the sealed surface was broken Δ: the above two states were mixed | 90°C | Peel | Δ | Peel | Peel |
| | 100°C | Peel | Δ | Peel | Peel |
| | 110°C | Δ | Δ | Peel | Peel |
| | 120°C | Tear | Δ | Peel | Peel |
| Peeling energy (mJ) | 90°C | 90.2 | 77 | 0.2 | 48.3 |
| | 100°C | 142 | 102 | 42 | 60.9 |
| | 110°C | 171 | 139 | 41.8 | 70.5 |
| | 120°C | 163 | 156 | 66.2 | 78.6 |

[Table 3]

| | | | | | Example 17 | Example 18 | Example 19 |
|---|---|---|---|---|---|---|---|
| Laminate | Sealant film | Heat-seal layer | Thickness [μm] | | 3 | 3 | 3 |
| | | | Component (A) | terPP (A-1) [% by mass] | 70 | 70 | 70 |
| | | | Component (B) | PBR (B2-1) [% by mass] | 30 | 30 | 30 |
| | | Adjacent layer | Thickness [μm] | | 3 | 3 | 3 |
| | | | Component (A) | hPP (A-2) [% by mass] | | 40 | 40 |
| | | | Component (B) | HP-LDPE (B1-1) [% by mass] | | | |
| | | | | L-LDPE (B1-2) [% by mass] | | | |
| | | | | EBR (B1-3) [% by mass] | | | |
| | | | | EBR (B1-4) [% by mass] | | | 48 |
| | | | | EBR (B1-5) [% by mass] | 80 | 40 | |
| | | | | Propylene resin composition (B2-3) (PEBR (B2-2) [% by mass]) | 20 (17.0) | 20 (17.0) | |
| | | | | PER (B2-4) [% by mass] | | | 12 |
| | Substrate film | | Thickness [μm] | | 14 | 14 | 14 |
| | | | Component (A) | hPP (A-2) [% by mass] | 100 | 100 | 100 |

Table 3 (continued)

| | | Example 17 | Example 18 | Example 19 |
|---|---|---|---|---|
| Content of components (A) and (B) in adjacent layer | Component (A) [% by mass] | 3.0 | 43.0 | 40.0 |
| | Component (B) [% by mass] | 97.0 | 57.0 | 60.0 |
| Heat-seal strength (N/15mm) ·pressure:0.1MPa ·times:0.5 seconds | 90°C | 9.6 | 7.8 | 4.3 |
| | 100°C | 8.8 | 8.3 | 8.3 |
| | 110°C | 8.3 | 8.6 | 13.6 |
| | 120°C | 8.0 | 14.1 | 15.9 |
| Peeling appearance Peel: peeling occurred only at interface Tear: edge of the sealed surface was broken Δ: the above two states were mixed | 90°C | Peel | Peel | Peel |
| | 100°C | Peel | Peel | Peel |
| | 110°C | Peel | Peel | Tear |
| | 120°C | Peel | Tear | Tear |
| Peeling energy (mJ) | 90°C | 78.1 | 48.3 | 37 |
| | 100°C | 71.6 | 71.6 | 69.7 |
| | 110°C | 87.4 | 91 | 60.2 |
| | 120°C | 84.7 | 61.8 | 78.9 |

Table 3 (continued)

| | | | | | Example 20 | Example 21 | Example 22 |
|---|---|---|---|---|---|---|---|
| Laminate | Sealant film | Heat-seal layer | Thickness [μm] | | 1 | 0.5 | 3 |
| | | | Component (A) | terPP (A-1) [% by mass] | 70 | 70 | 70 |
| | | | Component (B) | PBR (B2-1) [% by mass] | 30 | 30 | 30 |
| | | Adjacent layer | Thickness [μm] | | 3 | 3 | 2 |
| | | | Component (A) | hPP (A-2) [% by mass] | 20 | 20 | 20 |
| | | | Component (B) | HP-LDPE (B1-1) [% by mass] | | | |
| | | | | L-LDPE (B1-2) [% by mass] | | | |
| | | | | EBR (B1-3) [% by mass] | | | |
| | | | | EBR (B1-4) [% by mass] | | | |
| | | | | EBR (B1-5) [% by mass] | 60 | 60 | 60 |
| | | | | Propylene resin composition (B2-3) | 20 | 20 | 20 |
| | | | | (PEBR (B2-2) [% by mass]) | (17.0) | (17.0) | (17.0) |
| | | | | PER(B2-4) [% by mass] | | | |
| | Substrate film | | Thickness [μm] | | 14 | 14 | 14 |
| | | | Component (A) | hPP (A-2) [% by mass] | 100 | 100 | 100 |

Table 3 (continued)

| | | Example 20 | Example 21 | Example 22 |
|---|---|---|---|---|
| Content of components (A) and (B) in adjacent layer | Component (A) [% by mass] | 23.0 | 23.0 | 23.0 |
| | Component (B) [% by mass] | 77.0 | 77.0 | 77.0 |
| Heat-seal strength (N/15mm) ·pressure:0.1MPa ·times:0.5 seconds | 90°C | 5.4 | 5.7 | 7.5 |
| | 100°C | 9.3 | 6.8 | 9.8 |
| | 110°C | 10.5 | 7.4 | 12.3 |
| | 120°C | 11.1 | 7.5 | 13.4 |
| Peeling appearance Peel: peeling occurred only at interface Tear: edge of the sealed surface was broken Δ: the above two states were mixed | 90°C | Peel | Peel | Peel |
| | 100°C | Peel | Peel | Peel |
| | 110°C | Peel | Peel | Δ |
| | 120°C | Peel | Peel | Δ |
| Peeling energy (mJ) | 90°C | 41.3 | 37.6 | 53.4 |
| | 100°C | 65 | 48.1 | 79.7 |
| | 110°C | 80.2 | 53.3 | 104 |
| | 120°C | 91.6 | 64.1 | 101 |

Table 3 (continued)

| | | | | | Example 23 | Example 24 | Comparative Example 1 |
|---|---|---|---|---|---|---|---|
| Laminate | Sealant film | Heat-seal layer | Thickness [μm] | | 3 | 1 | 3 |
| | | | Component (A) | terPP (A-1) [% by mass] | 70 | 70 | 70 |
| | | | Component (B) | PBR (B2-1) [% by mass] | 30 | 30 | 30 |
| | | Adjacent layer | Thickness [μm] | | 1 | 5 | 3 |
| | | | Component (A) | hPP (A-2) [% by mass] | 20 | 20 | 100 |
| | | | Component (B) | HP-LDPE (B1-1) [% by mass] | | | |
| | | | | L-LDPE (B1-2) [% by mass] | | | |
| | | | | EBR (B1-3) [% by mass] | | | |
| | | | | EBR (B1-4) [% by mass] | | | |
| | | | | EBR (B1-5) [% by mass] | 60 | 60 | |
| | | | | Propylene resin composition (B2-3) | 20 | 20 | |
| | | | | (PEBR (B2-2) [% by mass]) | (17.0) | (17.0) | |
| | | | | PER (B2-4) [% by mass] | | | |
| | Substrate film | | Thickness [μm] | | 14 | 14 | 14 |
| | | | Component (A) | hPP (A-2) [% by mass] | 100 | 100 | 100 |

Table 3 (continued)

| | | Example 23 | Example 24 | Comparative Example 1 |
|---|---|---|---|---|
| Content of components (A) and (B) in adjacent layer | Component (A) [% by mass] | 23.0 | 23.0 | 100.0 |
| | Component (B) [% by mass] | 77.0 | 77.0 | 0.0 |
| Heat-seal strength (N/15mm) ·pressure: 0.1MPa ·times: 0.5 seconds | 90°C | 5.3 | 7.4 | 4.2 |
| | 100°C | 7.9 | 10.8 | 4.0 |
| | 110°C | 7.6 | 12.7 | 4.1 |
| | 120°C | 7.2 | 13.1 | 3.5 |
| Peeling appearance Peel: peeling occurred only at interface Tear: edge of the sealed surface was broken Δ: the above two states were mixed | 90°C | Peel | Peel | Tear |
| | 100°C | Δ | Peel | Tear |
| | 110°C | Tear | Δ | Tear |
| | 120°C | Tear | Δ | Tear |
| Peeling energy (mJ) | 90°C | 28.6 | 56.8 | 12.5 |
| | 100°C | 36 | 84 | 12.4 |
| | 110°C | 20 | 111 | 12.6 |
| | 120°C | 14.7 | 123 | 13.1 |

**Claims**

1. A sealant film comprising:

    a heat-seal layer; and
    an adjacent layer adjacent to the heat-seal layer, wherein the sealant film satisfies the following requirement (1), the heat-seal layer comprises an olefin polymer (B) satisfying the following requirement (2) and a propylene polymer (A) satisfying the following requirement (3), and
    the adjacent layer comprises 1 to 70% by mass of the propylene polymer (A) satisfying the following requirement (3) and 30 to 99% by mass of the olefin polymer (B) satisfying the following requirement (2), and comprises 0 to 70% by mass of a propylene polymer (B2) in the olefin polymer (B), provided that (A) + (B) = 100% by mass, requirement (1): the sealant film is a stretched film or a non-stretched film, requirement (2): a melting point is less than 120°C or is not observed, and requirement (3): a melting point is 121°C or more and 170°C or less.

2. The sealant film according to claim 1, wherein the olefin polymer (B) comprises at least one olefin polymer selected from the group consisting of an ethylene polymer (B1), the propylene polymer (B2), and a 1-butene polymer (B3).

3. The sealant film according to claim 2, wherein the ethylene polymer (B1) is at least one selected from highpressure low-density polyethylene, linear low-density polyethylene, and an ethylene·α-olefin copolymer.

4. The sealant film according to any one of claims 1 to 3, wherein the heat-seal layer is 0.1 to 80% by mass of the olefin polymer (B) and 20 to 99.9% by mass of the propylene polymer (A), provided that a total amount of (A) + (B) is 100% by mass.

5. The sealant film according to any one of claims 1 to 4, wherein a heat-seal strength at 100°C when the heat-seal layers are adhered to each other is 6 N/15 mm or more.

6. A laminate comprising a substrate film adjacent to the adjacent layer of the sealant film according to any one of claims 1 to 5.

7. The laminate according to claim 6, wherein at least one film selected from the sealant film and the substrate film comprises at least one layer selected from a printing layer, a barrier layer, and an embossing layer.

8. A package formed by the laminate according to claim 6 or 7.

9. A molded product which is a recycled product of a package film or a package formed by the laminate according to claim 6 or 7, or the package according to claim 7.

10. A method for producing the laminate according to claim 6 or 7,

   wherein at least one film selected from the sealant film and the substrate film comprises a barrier layer, and wherein the method comprising:

   forming the barrier layer as a layer in the sealant film or the substrate film by metal vapor deposition, a coating method or a co-extrusion method; and
   laminating the sealant film and the substrate film.

11. A laminate comprising

   a sealant film comprising:

   a heat-seal layer; and
   an adjacent layer formed on one surface of the heat-seal layer,

   wherein when the heat-seal layers are heat-fused to each other upon heat-sealing under conditions of a temperature of 100°C, a pressure of 0.1 MPa, and a pressure time of 0.5 seconds, a heat-seal strength at 100°C is 6 N/15mm or more, a peeling form is cohesive peeling, and the laminate comprises 50% by mass or more of a propylene polymer.

12. The laminate according to claim 11, wherein the adjacent layer comprises 1 to 70% by mass of the propylene polymer (A) satisfying the requirement (3) according to claim 1 and 30 to 99% by mass of the olefin polymer (B) satisfying the requirement (2) according to claim 1.

## INTERNATIONAL SEARCH REPORT

| | International application No. |
|---|---|
| | **PCT/JP2021/039242** |

**A.    CLASSIFICATION OF SUBJECT MATTER**

*B32B 27/08*(2006.01)i; *B32B 27/32*(2006.01)i; *B65D 65/40*(2006.01)i
FI:    B32B27/32 E; B32B27/08; B65D65/40 D

According to International Patent Classification (IPC) or to both national classification and IPC

**B.    FIELDS SEARCHED**

Minimum documentation searched (classification system followed by classification symbols)

B32B27/08; B32B27/32; B65D65/40

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2006/088216 A1 (NIPPON PAPER-PACK CO., LTD.) 24 August 2006 (2006-08-24)<br>claims, page 5, line 9 to page 10, line 1, page 16, lines 3-13, examples 2-4, fig. 5 | 1-12 |
| A | WO 2017/098953 A1 (DIC CORP.) 15 June 2017 (2017-06-15)<br>entire text | 1-12 |
| A | WO 2015/166848 A1 (SUN-TOX CO., LTD.) 05 November 2015 (2015-11-05)<br>entire text | 1-12 |
| A | JP 2005-162249 A (IDEMITSU UNITECH CO., LTD.) 23 June 2005 (2005-06-23)<br>entire text | 1-12 |
| A | JP 2007-44930 A (TOHCELLO CO., LTD.) 22 February 2007 (2007-02-22)<br>entire text | 1-12 |
| A | JP 2009-248394 A (ASAHI KASEI CHEMICALS CORP.) 29 October 2009 (2009-10-29)<br>entire text | 1-12 |
| A | JP 2018-118744 A (GUNZE LTD.) 02 August 2018 (2018-08-02)<br>entire text | 1-12 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 December 2021** | **28 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 253 045 A1

**INTERNATIONAL SEARCH REPORT**

<br>

International application No.

**PCT/JP2021/039242**

**C.    DOCUMENTS CONSIDERED TO BE RELEVANT**

| Category* | Citation of document, with indication, where appropriate, of the relevant passages | Relevant to claim No. |
|---|---|---|
| A | WO 2010/104026 A1 (DAINIPPON PRINTING CO., LTD.) 16 September 2010 (2010-09-16)<br>entire text | 1-12 |
| A | WO 2009/123286 A1 (TOHCELLO CO., LTD.) 08 October 2009 (2009-10-08)<br>entire text | 1-12 |

Form PCT/ISA/210 (second sheet) (January 2015)

31

| INTERNATIONAL SEARCH REPORT<br>Information on patent family members | | International application No.<br>**PCT/JP2021/039242** |
|---|---|---|

| Patent document<br>cited in search report | Publication date<br>(day/month/year) | Patent family member(s) | Publication date<br>(day/month/year) |
|---|---|---|---|
| WO 2006/088216 A1 | 24 August 2006 | US 2009/0205994 A1<br>claims, paragraphs [0029]-[0038], [0061], examples 3, 4, 5, fig. 5<br>EP 1849598 A1<br>CN 101119844 A | |
| WO 2017/098953 A1 | 15 June 2017 | KR 10-2018-0092939 A | |
| WO 2015/166848 A1 | 05 November 2015 | CN 106255595 A<br>KR 10-2016-0147721 A<br>TW 201607751 A | |
| JP 2005-162249 A | 23 June 2005 | WO 2005/054081 A1<br>KR 10-2006-0109976 A<br>CN 1890162 A<br>TW 200528364 A | |
| JP 2007-44930 A | 22 February 2007 | (Family: none) | |
| JP 2009-248394 A | 29 October 2009 | (Family: none) | |
| JP 2018-118744 A | 02 August 2018 | (Family: none) | |
| WO 2010/104026 A1 | 16 September 2010 | US 2012/0003412 A1<br>claims, example<br>EP 2407393 A1<br>KR 10-2011-0138342 A | |
| WO 2009/123286 A1 | 08 October 2009 | US 2010/0310890 A1<br>claims, example<br>CN 101990496 A<br>KR 10-2010-0106605 A<br>TW 200942411 A<br>CN 105252860 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11221884 A

- WO 200657361 A

**Non-patent literature cited in the description**

- **KAZUO HISHINUMA.** Proposal of measurement and evaluation method of peeling energy on the sealing surface of thermal sealing (heat-seal). *Journal of the Adhesion Society of Japan,* 2006, vol. 42 (4), 146-152